# EUROPEAN PATENT SPECIFICATION

(11) **EP 0 414 447 B1**
(45) Date of publication and mention of the grant of the patent: **10.08.1994**
(21) Application number: 90309015.7
(22) Date of filing: 16.08.1990
(51) Int. Cl.: B23K 1/008, B23K 1/012

(54) **Method for soldering aluminium materials**
Verfahren zum Löten von Aluminiumwerkstoffen
Méthode pour le brasage tendre de matière en aluminium

(30) Priority: 23.08.1989 JP 217955/89
(43) Date of publication of application: 27.02.1991
(73) Proprietor: SHOWA ALUMINUM KABUSHIKI KAISHA, Sakaishi Osaka (JP)
(72) Inventor: Sato, Shoichi, Sakaishi, Osaka (JP); Murooka, Shuichi, Sakaishi, Osaka (JP); Osame, Yasuhiro, Sakaishi, Osaka (JP); Arai, Satoli, Sakaishi, Osaka (JP)
(74) Representative: Kerr, Simonne June

(56) References cited:
- US-A- 4 119 262
- US-A- 4 610 390

## Description

The invention relates to a method for brazing aluminum materials according to the preamble of claim 1 (see US-A-4 119 262), the aluminum materials being suited for manufacture of various goods such as heat exchangers which are generally made by the brazing process.

The word "aluminum" used in this specification is meant to include its alloys.

### Description of Prior Art

Flux brazing method which uses a proper flux is widely employed in cases wherein the vacuum brazing is not available, in order to braze the aluminum parts of such heat exchangers made of aluminum and used as a radiator in automobiles, as an evaporator or condenser for car air-conditioners, or as elemental units of other electric or mechanical apparatuses.

In the known flux brazing method, it has been a general practice to disperse first the flux in water or solvent so as to prepare a suspension. The suspension is then sprayed or showered onto the aluminum materials or parts which are to be bonded to each other, or they are immersed in the suspension which is to be applied thereto. After the aluminum parts are dried to remove water contained in the suspension, said parts are subsequently heated to a predetermined temperature in a non-oxidizing atmosphere so that a brazing agent is molten and the brazing is effected.

Productivity of such a known practice is however significantly low because it needs some operations for application of the suspension and also for drying the parts to which it has been applied. A drying oven used to dry said parts has rendered the equipment large-sized to a disadvantageous degree. It has been somewhat cumbersome to control the temperature of said suspension and the applied quantity thereof. Further, the aluminum materials are in general given an excessive amount of the flux so that brazing ovens are fouled therewith and/or the flux molten in the brazing ovens makes a deposit therein. Therefore, the cleaning or overhauling of the brazing ovens should be done at short intervals. The flux applied to the aluminum materials in the manner as mentioned above will remain as gray or white blots on the surfaces thereof after the brazing process is completed. Those blots not only make uneven the surface color of said materials but also make worse the smoothness or homogeneity of a subsequent surface treatment. It is very difficult to remove the remaining flux from the surfaces of aluminum materials because it is fixed thereto unseparably.

US-A-4 119 262 discloses bromine gas used as a flux which must be contained at 1 % (i.e. 10,000 ppm) or more in the gas phase within the brazing apparatus (see claim 1, (d)).

It is therefore an object of the invention to provide a method for brazing aluminum materials wherein no process is required to apply a suspension or to preliminarily dry the aluminum materials.

Various experiments and researches have been conducted to accomplish the objects and found a fact that aluminum materials to be bonded can effectively be brazed to each other, if they are heated to a predetermined temperature in a fluoride gas-containing atmosphere.

According to the present invention a method for brazing aluminum materials comprising the steps of producing a gaseous flux atmosphere within a brazing oven, fluxing and brazing the aluminum materials to be bonded to each other by heating the materials within the atmosphere at a predetermined temperature at which a brazing agent melts, is characterized in that the gaseous flux is KAlF₄ gas and an amount of the KAlF₄ gas contained in the atmosphere is 1 to 500 ppm.

The invention will now be described further, by way of example, with reference to the accompanying drawings, in which:-
Fig. 1 is a block diagram showing an example of apparatus used to carry out a method according to the invention;
Fig. 2 is a block diagram showing another example of apparatus used to carry out the method according to the invention;
Fig. 3 also is a block diagram showing a further example of apparatus used to carry out the method according to the invention.

At first, the invention which is applied to the brazing of aluminum materials within a fluoride gas-containing atmosphere will be described.

Fluoride gases do function in a manner similar to that of the known fluxes and thus are effective to remove oxide coating of the portions which are to be brazed. The wetting property and flowability of brazing agents are improved by the fluoride gases, thereby ensuring a high brazeability. The words "fluoride gases" denote here gases of chemical compounds, i.e., fluorides which are composed of fluorine and other elements but which are not restricted to be of particular compositions. The fluorides have to gasify preferably at temperatures below 600 degrees centigrade, since the brazing of aluminum is conducted in general at about 600 degrees centigrade. However, only the use of KAlF₄ (potassium tetrafluoroaluminum) as the fluoride gas falls within the scope of the present invention. It is desirable to maintain a non-oxidizing atmosphere in an oven which contain such fluoride gas. In general, such an atmosphere is composed of an inert gas, for instance nitrogen gas, and the fluoride gas mixed therewith. For a satisfactory "flux effect", 1 to 500 ppm of the fluoride gases must be contained in the atmosphere. A poor content below 0.1 ppm is too low to realize a good flux effect, while a rich content above 10,000 ppm is superfluous failing to provide no higher flux effect. Although water vapor or oxygen is to be excluded from the atmosphere, the flux effect will scarcely be reduced even if the atmosphere is mixed with water vapor or oxygen at a quantity thereof between 0.1 to 10,000 ppm. In the event that water vapor content would exceed 10,000 ppm, the KAlF₄ gas might not be generated, while in the event that oxygen gas content would exceed 10,000 ppm, the surface oxide layer might become so thick that the brazing process might be seriously affected.

Arrangements for adjusting the condition of the atmosphere within the brazing oven will be described below, only by way of example.

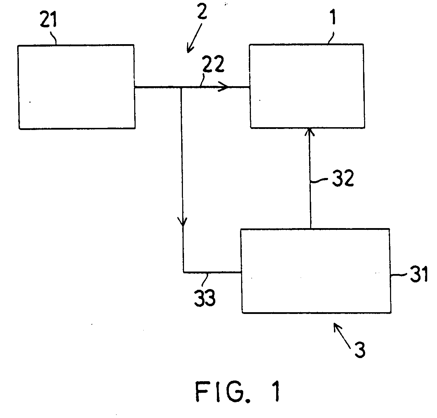

In a first exemplified arrangement, the inert gas such as nitrogen gas and fluoride gas are introduced into the oven from respective sources. A brazing equipment according to this arrangement shown in Fig. 1 is provided with a brazing oven 1, an inert gas-supplying apparatus 2 for feeding the inert gas to the oven, and a fluoride gas-supplying apparatus 3 for feeding the fluoride gas(es) to the brazing oven. The inert gas-supplying apparatus 2 comprises an inert gas supplier 21 and an inert gas pipe 22, whereas the fluoride gas-supplying apparatus 3 comprises a fluoride gas generator 31 and a fluoride gas pipe 32. The fluoride gas flows into the oven through a passage and the inert gas does so through another passage whereby control of an amount of supplied fluoride gas can be effected easily. In the event that either passage becomes out of order, the other source may be relied on to continue operation by supplying the oven with a mixture of the inert gas and the fluoride gas, thus making easier the recovery of operable conditions. In detail, the oven is usually filled first with the inert gas before the fluoride gas is produced using a carrier gas in the fluoride gas generator 31 and is fed to the oven, the carrier gas being the inert gas which is transported to the oven through a carrier gas pipe 33 shown in Fig. 1. Alternatively, the inert gas and the fluoride gas may be charged into the oven at the same time. In case of the fluoride which is liquid or solid at the normal room temperature, it is to be preliminarily heated and gasified in the fluoride gas generator 31.

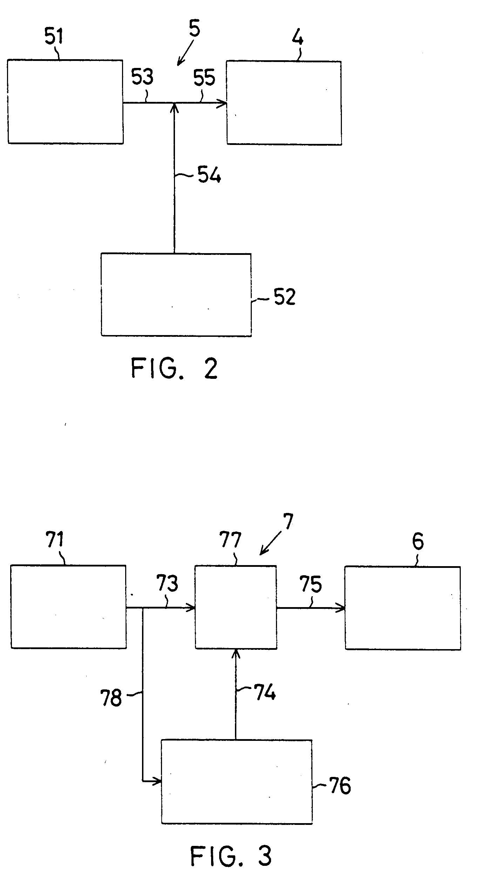

In another example of the arrangements, the inert gas and the fluoride gas are premixed on the outside of the brazing oven and subsequently supplied thereto. The brazing equipment in this case is illustrated in Fig. 2 or Fig. 3. The equipment in Fig. 2 is suited to use a fluoride which is in its gasified state at the room temperature or at the temperatures close to the room temperature. A brazing oven 4 and a gas mixture supplying apparatus 5 for feeding a gas mixture to the oven 4 are included in the equipment in Fig. 2. The gas mixture supplying apparatus 5 comprises an inert gas supplier 51, a fluoride gas supplier 52, an inert gas pipe 53, a fluoride gas pipe 54 and a gas mixture pipe 55. A mixture of an inert gas from the inert gas supplier 51 and a fluoride gas from the fluoride gas supplier 52 flows through the gas mixture pipe 55 into the brazing oven 4. On the other hand, the equipment shown in Fig. 3 is more adapted to deal with the fluoride KAlF₄ which is liquid or solid at the room temperature, the equipment also comprising a brazing oven 6 and a gas mixture supplying apparatus 7. The gas mixture supplying apparatus 7 comprises an inert gas supplier 71, a fluoride gas generator 76, a mixing tank 77, an inert gas pipe 73, a fluoride gas pipe 74, a gas mixture pipe 75, and a carrier gas pipe 78 branched from the inert gas pipe 73. The fluoride is heated in the fluoride gas generator 76 so as to produce the fluoride gas, which is then carried by a carrier gas ( i.e., the inert gas from the carrier gas pipe 78 ) and forwarded to the mixing tank 77. The fluoride gas is mixed within the mixing tank 77 with the inert gas from the inert gas pipe 73, thereby producing a gas mixture which subsequently flows through the gas mixture pipe 75 into the brazing oven 6. Such a supply of the mixed gas comprising the fluoride and inert gases contributes to formation of an atmosphere containing the fluoride gas homogeneously diffused throughout the oven. This homogeneous atmosphere renders surer and more reliable the brazing process.

In a still further arrangement, a fluoride is put in a receptacle disposed within a brazing oven and is heated to gasify. The fluoride used in this method must be solid or liquid at the room temperature and is to be gasifiable at the temperatures below 600 degrees centigrade since the brazing is performed in general at about 600 degrees centigrade. The fluoride KAlF₄ is suitable to this method. A mixture of fluorides also may be used instead of using a single fluoride. Further in this arrangement, a eutectic complex salt of KF (potassium fluoride) and AlF₃ (aluminum trifluoride) may be substituted for the fluorides exemplified hereinbefore. Though the receptacle may be of any arbitrary shape, a shallow dish-like one which is 5 to 50 mm in depth is preferred for smooth gasification and quick vaporization of the fluoride. Heat of evaporation is given to the fluoride naturally without aid of any particular means when the oven is heated to the brazing temperature. By simply placing the receptacle in the oven, the fluoride in said receptacle is automatically heated and gasifies to produce the necessary fluoride atmosphere in the oven whereby any special fluoride gas supplier needs not be added to the brazing oven, thus allowing any un-reconstructed conventional ovens to be employed in the invention.

In any arrangement mentioned above, a flow rate of the inert gas within the oven is to be predetermined to give a flow speed of 0.1 to 10 cm / sec.

Any type of brazing ovens, including the conveyer-equipped continuous oven and the batch-process oven, is available without affecting the advantages and effects in the invention.

After the fluoride gas atmosphere is prepared for the brazing oven in the manner as described above, the brazing process will be carried out next. A brazing agent is heated to a temperature within a range of 580 to 620 degrees centigrade so as to melt, this temperature being below a melting point of the aluminum materials which are brazed to each other in this process. The fluoride gas functions as a flux so that the materials are brazed satisfactorily. The brazing agent is usually an Al-Si (aluminum-silicon) alloy which contains about 4.5 to 13.5 % by weight of Si (silicon). For the purpose of better convenience in operation, the brazing agent is applied preferably by the cladding method to at least one of the aluminum materials to be brazed.

It will now be apparent that the method for brazing aluminum materials in the invention is characterized in that the fluoride atmosphere is produced in the brazing oven and subsequently or simultaneously the aluminum materials are heated to the predetermined temperature so as to be brazed with the aid of the brazing agent which melt at said temperature. Here is no necessity of applying any flux suspension to said materials or of drying same after such an application. Therefore, the brazing process is made simpler and the productivity thereof is improved in the invention. The brazing equipment is rendered small-sized owing to the omission of the drying oven, and further the overall efficiency of the brazing process is improved by cutting out unnecessary control of the temperature and applied quantity of suspension. An amount of the fluoride gas functioning as the flux is remarkably less than the amount of flux applied in the known manner so that the inside of the brazing oven is hardly contaminated with the fluoride. There arises no drop of molten flux nor any deposit thereof inside the oven, thereby making less frequent the cleaning or overhauling of said oven. In addition, a residual amount of the fluoride remaining on the surface of the brazed aluminum materials is much lesser than that in the known method. This feature is advantageous in that the brazed products obtain an excellent appearance free from any stain or blot and in that such a good surface is well adapted to a subsequent treatment.

### DETAILED DESCRIPTION OF THE PREFERRED EMBODIMENTS

Some preferred embodiments of the invention will be described below.

### First Embodiment

Nitrogen gas was supplied to a brazing oven through a passage, and on the other hand an amount of a fluoride gas was charged into the oven through another passage, the fluoride gas containing 70 ppm of KAlF₄ which were heated to gasify, in nitrogen gas used as a carrier gas. Thus, the oven was filled with a fluoride-containing nitrogen atmosphere, which contained 100 ppm of water vapor and 8 ppm of oxygen.

Tubular members having a wall thickness of 0.8 mm and made of an aluminum ally A1100 by the extrusion method were combined with fin members so as to assemble a heat exchanger of the corrugated type. Each of the fin members comprised a band-like core which was made of an aluminum alloy A3003 and had its both sides covered with skins of another aluminum alloy, that is, Al-10%Si-alloy functioning as a brazing agent. The skins which formed such a both-sided-brazing sheet were 0.145 mm in thickness and their cladding ratio were 15 %. The assembled members were put in the brazing oven and brazed therein by being heated at a temperature of 600 degrees centigrade for five minutes.

### Second Embodiment

A fluoride gas containing 10 ppm of KAlF₄ which was heated to gasify was mixed with nitrogen gas which was being supplied to a brazing oven. Thus, the oven was filled with a fluoride-containing nitrogen atmosphere, which contained 120 ppm of water vapor and 10 ppm of oxygen. The same assembled members as in the first embodiment were put in the oven and brazed under the same condition as in the first embodiment.

### Third Embodiment

An amount of solid KAlF₄ was placed in a dish-like receptacle which was 25 mm in depth. The receptacle was then put in a brazing oven filled with nitrogen gas and was heated in the oven to vaporize KAlF₄. Thus, the oven was filled with a fluoride-containing nitrogen atmosphere, which contained 200 ppm of KAlF₄ gas, 100 ppm of water vapor and 8 ppm of oxygen. The same assembled members as in the first embodiment were put in the oven and brazed under the same condition as in the first embodiment.

### Fourth Embodiment

A brazing oven was filled, in the same manner as in the third embodiment, with a fluoride-containing nitrogen atmosphere which contained 100 ppm of KAlF₄ gas, 200 ppm of water vapor and 8 ppm of oxygen. The same assembled members as in the first embodiment were put in the oven and brazed under the same condition as in the first embodiment.

### Comparative Reference 1

A eutectic complex compound of AlF₃ and KF was used as a flux, which was dispersed in water to prepare a suspension containing 5 % by weight of the flux. The same assembled members as in the first embodiment were immersed in this suspension so as to coat them with said suspension, and were dried thereafter.

The members coated with the flux were then heated at 600 degrees centigrade for 5 minutes within a nitrogen gas atmosphere containing 100 ppm of water vapor and 10 ppm of oxygen, so as to be brazed in said atmosphere.

The brazed members obtained in the abovedescribed embodiments and the comparative reference were visually inspected for their brazeability and for their appearance, in addition to evaluation of their aptitude with surface treatments. The aptitude was tested by the so-called "checkered pattern" method wherein a paint was sprayed onto flat surfaces of the members so that it was dried providing films thereon. The films were then scratched to form a number of small areas of 1 mm square. An adhesive tape was applied to the film surfaces and subsequently peeled off to count up areas from which the film pieces were not peeled. A result of those tests is given on Table 1.

As will be seen on Table 1, it has become possible according to the invention to satisfactorily braze the aluminum materials with a small amount of the fluoride gas wherein an excellent surface state is given to the brazed materials.

**Table 1**

| Samples | Brazeability ( *1 ) | Appearance ( *2 ) | Aptitude for Surface Treatment ( *3 ) |
|---|---|---|---|
| 1st Embdt. | G | G | 100 / 100 |
| 2nd Embdt. | G | G | 100 / 100 |
| 3rd Embdt. | G | G | 100 / 100 |
| 4th Embdt. | G | G | 100 / 100 |
| Comp. Ref. | G | N | 55 / 100 |
| REMARKS: The abbreviations "Embdt." and "Comp. Ref." denote "Embodiment" and "Comparative Reference 1", respectively. | | | |

| | | | |
|---|---|---|---|
| ( *1 ) "G" denotes "Good", and "N" denotes "No Good". | | | |
| ( *2 ) "G" means that any flux residue is not found visually and appearance is very clean. "N" means that some amount of flux residue is found by visual inspection. | | | |
| ( *3 ) Ratio of the number of small square areas from which the paint film were not peeled to the total number of said small areas. | | | |

## Claims

1. A method for brazing aluminum materials comprising the steps of producing a gaseous flux atmosphere within a brazing oven (1), fluxing and brazing the aluminum materials to be bonded to each other by heating the materials within the atmosphere at a predetermined temperature at which a brazing agent melts, characterized in that the gaseous flux is KAlF₄ gas and an amount of the KAlF₄ gas contained in the atmosphere is 1 to 500 ppm

2. A method according to claim 1, characterized in that the KAlF₄ gas-containing atmosphere is produced by introducing, into the oven, an inert gas and the KAlF₄ gas through different passages (22).

3. A method according to claim 1, characterized in that the KAlF₄ gas-containing atmosphere is produced by introducing, into the oven, a mixture of an inert gas and the KAlF₄ gas.

4. A method according to claim 1, characterized in that the KAlF₄ gas-containing atmosphere is produced by heating KAlF₄ in a receptacle (31) which is placed in the oven so as to gasify the KAlF₄ therewithin.

## Patentansprüche

1. Verfahren zum Hartlöten von Aluminiumwerkstoffen mit den Schritten des Erzeugens einer gasförmigen Flußmittelatmosphäre in einem Hartlötofen (1), des Beaufschlagens mit Flußmittel und Hartlötens der miteinander zu verbindenden Aluminiumwerkstoffe durch Erhitzen der Werkstoffe in der Atmosphäre bei einer vorbestimmten Temperatur, bei der ein Lötmittel schmilzt, dadurch gekennzeichnet, daß das gasförmige Flußmittel KAlF₄ ist und der Anteil des in der Atmosphäre enthaltenen KAlF₄-Gases 1 bis 500 ppm beträgt.

2. Verfahren nach Anspruch 1, dadurch gekennzeichnet, daß die KAlF₄-Gas enthaltende Atmosphäre durch Einführen eines Inertgases und des KAlF₄-Gases durch verschiedene Leitungen (22) in den Ofen erzeugt wird.

3. Verfahren nach Anspruch 1, dadurch gekennzeichnet, daß die KAlF₄-Gas enthaltende Atmosphäre durch Einführen einer Mischung aus einem Inertgas und dem KAlF₄-Gas in den Ofen erzeugt wird.

4. Verfahren nach Anspruch 1, dadurch gekennzeichnet, daß die KAlF₄-Gas enthaltende Atmosphäre durch Erhitzen von KAlF₄ in einem Behälter (31) erzeugt wird, der in den Ofen gesetzt wird, um das KAlF₄ darin zu vergasen.

## Revendications

1. Une méthode pour le brasage tendre de matériaux en aluminium, comprenant les étapes consistant à produire une atmosphère d'apport gazeux dans un four de brasage (1), recouvrir d'apport et braser les matériaux en aluminium à assembler l'un à l'autre en chauffant les matériaux dans l'atmosphère à une température prédéterminée à laquelle la brasure fond, caractérisée en ce que l'apport gazeux est du KA*l*F₄ gazeux et que la quantité de KA*l*F₄ gazeux contenu dans l'atmosphère est de 1 à 500 ppm.

2. Une méthode suivant la revendication 1, caractérisée en ce que l'atmosphère à teneur en KA*l*F₄ gazeux est produite par introduction dans le four d'un gaz inerte et du KA*l*F₄ gazeux par des passges différents (22).

3. Une méthode suivant la revendication 1, caractérisée en ce que l'atmosphère à teneur en KA*l*F₄ gazeux est produite par introduction dans le four d'un mélange d'un gaz inerte et de KA*l*F₄ gazeux.

4. Une méthode suivant la revendication 1, caractérisée en ce que l'atmosphère à teneur en KA*l*F₄ gazeux est produite par chauffage de KA*l*F₄ dans un récipient (31) qui est placé dans le four, de manière à y gazéifier le KA*l*F₄.
